(19) Europäisches Patentamt
European Patent Office
Office européen des brevets

(11) **EP 1 280 343 B1**

(12) **EUROPÄISCHE PATENTSCHRIFT**

(45) Veröffentlichungstag und Bekanntmachung des Hinweises auf die Patenterteilung:
**17.02.2016 Patentblatt 2016/07**

(51) Int Cl.:
***H04N 5/445*** *(2006.01)*

(21) Anmeldenummer: **02016188.1**

(22) Anmeldetag: **20.07.2002**

(54) **Verfahren und Vorrichtung zum Betreiben eines elektronischen Navigationssystems auf einem Bildschirm**

Method and device for operating an electronic navigation system on a display screen

Procédé et dispositif de mise en oeuvre d'un système de navigation électronique sur un écran d'affichage

(84) Benannte Vertragsstaaten:
**AT BE BG CH CY CZ DE DK EE ES FI FR GB GR IE IT LI LU MC NL PT SE SK TR**

(30) Priorität: **24.07.2001 DE 10135922**

(43) Veröffentlichungstag der Anmeldung:
**29.01.2003 Patentblatt 2003/05**

(73) Patentinhaber: **Grundig Multimedia AG**
**6362 Stansstad (CH)**

(72) Erfinder:
• **Herfet, Thorsten, Dr.**
**90592 Lindelburg (DE)**
• **Knuf, Lothar, Dr.**
**90419 Nürnberg (DE)**

(74) Vertreter: **Louis Pöhlau Lohrentz**
**Patentanwälte**
**Postfach 30 55**
**90014 Nürnberg (DE)**

(56) Entgegenhaltungen:
WO-A-01/15449      WO-A-01/47273
WO-A-01/73596      WO-A-02/104011
US-A- 5 758 257      US-A- 5 835 087
US-A- 6 005 597      US-A- 6 088 722
US-A- 6 163 316

**Beschreibung**

Die vorliegende Erfindung betrifft Verfahren und Vorrichtungen zum Betreiben eines elektronischen Navigationssystems auf einem Bildschirm, und insbesondere Verfahren und Vorrichtungen zum Betreiben eines Fernsehgeräts, bei dem eine elektronische Programmzeitschrift auf dem Bildschirm eines Fernsehgeräts wiedergegeben wird.

Derartige Verfahren nach dem Oberbegriff des Anspruchs 1, und insbesondere elektronische Programmzeitschriften, auch EPG = "electronic program guide" genannt, sind z.B. aus der WO 00/02385 A1 oder der WO 01/33838 A1 bekannt. Dabei sind auch an ein Fernsehgerät anschließbare oder in einem Fernsehgerät integrierte Zusatzgeräte vorgesehen, welche Bildschirmmasken erzeugen, in denen ein EPG dargestellt wird, um dem Benutzer die Möglichkeit zu geben, interaktiv in dem EPG zu "navigieren", d.h. sich in einem auf dem Fernsehbildschirm dargestellten EPG gemäß vom Benutzer vorgegebener Kriterien von einem Menüpunkt im EPG zum nächsten zu bewegen.

Mittels einer auf dem Bildschirm eines Fernsehgeräts eingeblendeten elektronischen Programmzeitschrift, bei der bestimmten Fernsehsendungen entsprechende Sichtfenster mit Zusatzinformationen wie z.B. Titel, Sendezeit, Altersfreigabe etc. angezeigt werden, kann ein Fernsehzuschauer dabei die von verschiedenen Sendern angebotenen Programme recherchieren.

Aus US -A- 5,758,257 ist ein System und Verfahren zur Zugriffsplanung auf Videoprogramme und anderen Daten mittels Teilnehmerprofile bekannt. Hierbei wird ein System und ein Verfahren zur Steuerung bzw. Regelung einer Übertragung von Daten- und Videoprogrammen in Übereinstimmung mit objektiven Profildaten beschrieben.

Aus US -A- 6,163,316 ist eine elektronische Programmzeitschrift offenbart, welche aus einer Vielzahl von angebotenen Programmen und deren Programminhalten eine elektronische Programmzeitschrift erstellt und dem Leser zur Auswahl bereitstellt.

Aus US -A- 6,005,597 ist ein Verfahren und eine Vorrichtung bekannt, welche anhand der Sehgewohnheiten eines Benutzers ein Benutzerprofil erstellt und verfügbare Programme in Abhängigkeit seiner Interessen präsentiert.

Die derzeit bekannten elektronischen Programmzeitschriften verwenden eine Menütechnik zur Navigation. Der Fernsehzuschauer wählt in einem Menü aus, ob er die gerade laufenden Filme dargestellt bekommen möchte, ob er alle Filme (aller Sender) zu einem bestimmten Zeitpunkt sehen möchte, oder ob er eine Auswahl nach Gattungsbegriffen treffen möchte, wie z.B. "Information" oder "Unterhaltung", etc.

Bei der Auswahl über Gattungen wandert der Fernsehzuschauer bei bekannten elektronischen Programmzeitschriften z.B. durch eine hierarchisch gegliederte Ordnung von Haupt- und Unterkategorien (z.B. Hauptkategorie "Information" mit den zugeordneten Unterkategorien "Nachrichten", "Sport", "Wetter"; oder Hauptkategorie "Unterhaltung" mit den zugeordneten Unterkategorien "Western", "Krimi", etc.).

Die Präsentation der Filme orientiert sich dabei oft an der Präsentation in bekannten gedruckten Programmzeitschriften, d.h. es handelt sich um eine zweidimensionale matrixartige Anordnung, bei der auf der senkrechten Achse z.B. die Zeit variiert und auf der waagerechten Achse die Sender variieren. Bei der heute üblichen Programmvielfalt kann dabei stets nur ein kleiner Programmausschnitt gezeigt werden; der Zuschauer hat die Möglichkeit, über Navigationstasten, wie sie z.B. an einer Fernbedienung vorgesehen sind, sich von Feld zu Feld zu bewegen.

Andere elektronische Programmzeitschriften ordnen z.B. die Sender in einer horizontal verlaufenden Spalte untereinanderstehend an und erlauben es, durch Klicken auf ein Sendersysmbol die Liste der von diesem Sender gezeigten Filme "aufzuklappen", d.h. den Filmen entsprechende Symbole werden mit Sendedaten (z.B. Anfangszeit und Länge) neben dem Sendersymbol aufgereiht.

Bei einem überschaubaren Angebot ist die Präsentation der Sendedaten (Sender, Anfangszeit, Endzeit sowie weitere charakteristische Daten, wie z.B. Kategorie des Programms, Altersbeschränkungen) und die Navigation in der elektronischen Programmzeitschrift kein Problem. Mit der zunehmenden Anzahl von Sendern und dem damit verbundenen und häufig nicht mehr überschaubaren Umfang der Datenmengen wird aber die Navigation in der Programmzeitschrift ein ernstes Problem.

Aufgabe der vorliegenden Erfindung ist es deshalb insbesondere, ein alternatives Konzept für eine elektronische Programmzeitschrift vorzuschlagen. Insbesondere soll dem Zuschauer eine intuitiv leicht zugängliche Art der Präsentation von Programminhalten geboten werden und insbesondere soll die Möglichkeit einer intuitiv leicht erlernbaren und effizienten Navigation in einer sehr umfangreichen Programmzeitschrift geboten werden.

Da ähnliche Probleme wie bei elektronischen Programmzeitschriften grundsätzlich aber auch in anderen Fällen auftreten, wo es um die grafische Anordnung von Informationsinhalten auf einem Bildschirm geht, liegt der Erfindung das verallgemeinerte Problem zugrunde, ein verbessertes elektronisches Navigationssystem bereitzustellen, bei dem Informationsinhalte auf einem Bildschirm dargestellt sind.

Erfindungsgemäß wird diese Aufgabe durch ein Verfahren nach Anspruch 1 oder eine Vorrichtung nach Anspruch 5 gelöst. Die abhängigen Ansprüche betreffen vorteilhafte Ausführungsformen der vorliegenden Erfindung.

Der der Erfindung zugrundeliegende neue Gedanke besteht darin, daß z.B. bei einer elektronischen Programmzeitschrift die Inhalte aller von verschiedenen Sendern ausgestrahlten Filme nach einem bestimmten Kategorisierungsschema numerisch in verschiedene Kategorien ("Primärkategorien") eingeordnet sind und zwischen den verschiedenen Filmen ein numerisches Abstandsmaß definiert ist, mittels dessen ein relativer Abstand zwischen verschiedenen Filmen definiert wird, welcher wiederum als Kriterium für die relative Anordnung der den unterschiedlichen Filmen in einer elektronischen Programmzeitschrift entsprechenden Darstellungsfenster auf dem Bildschirm dient.

Die Vorteile und Merkmale der vorliegenden Erfindung ergeben sich auch aus der nachfolgenden Erläuterung von bevorzugten Ausführungsbeispielen in Verbindung mit den Zeichnungen.

Es zeigen:

Fig. 1 ein Beispiel für eine Liste von Filmen mit Charakteristika zum Sendekanal und den Sendezeiten sowie ein Kategorisierungsschema mit "Primärkategorien" für Filminhalte, in welchem die jeweiligen Filme mit numerischen Kennziffern bewertet sind;

Fig. 2 die Ergebnisse einer Berechnung eines euklidischen Abstandsmaßes zwischen je zwei ein Paar bildender Filme, die gemäß dem Kategorisierungsschema nach Fig. 1 bewertet sind;

Fig. 3a die Darstellung von einzelnen Filmen entsprechenden Symbolen ("Sichtfenstern") in linearer Anordnung auf einem Fernsehbildschirm;

Fig. 3b eine Ausschnittsvergrößerung der Fig. 3a;

Fig. 4 die Darstellung von einzelnen Filmen entsprechenden Symbolen ("Sichtfenstern") in kreisförmiger Anordnung auf einem Fernsehbildschirm;

Fig. 5 eine Tabelle, die eine Zuordnung zwischen von einem Benutzer gewählten Begriffen ("Sekundärkategorien") und vorgegebenen Primärkategorien zeigt;

Fig. 6 eine Tabelle, die die Berechnung neuer Kennziffern für ein vom Benutzer mittels Sekundärkategorien vorgegebenes Wunschprofil veranschaulicht.

Nachfolgend wird die Erfindung beispielhaft anhand einer Anwendung auf dem Gebiet der elektronischen Programmzeitschriften erläutert.

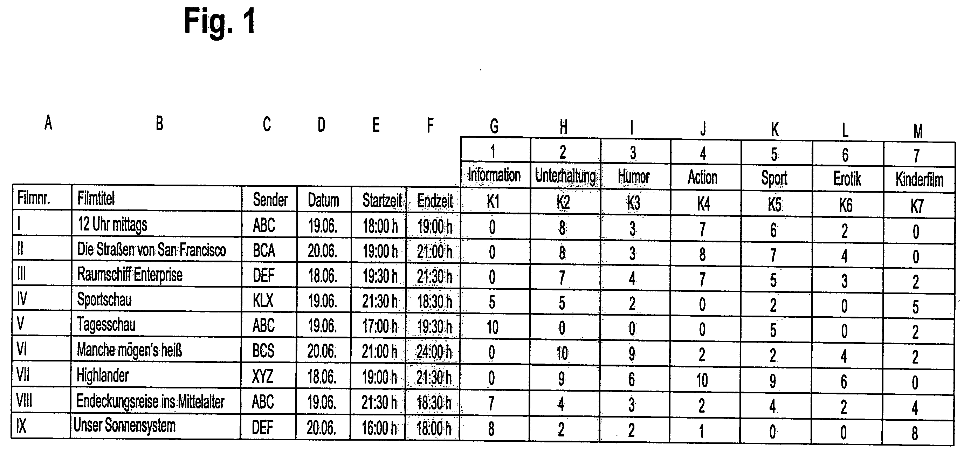

Fig. 1 zeigt, wie von einer Liste von Filmen ausgegangen wird, die in verschiedenen Sendern gezeigt werden.

In der Spalte A sind laufende (hier römische Nummern) für die verschiedenen Filme gezeigt, in der Spalte B die Titel der Filme, in der Spalte C Abkürzungen für die jeweiligen Sendeanstalten und in den Spalten D, E und F Informationen zum Datum und zur Uhrzeit, wann dieser Film ausgestrahlt wird.

In den Spalten F usw. folgen Kategorien (im folgenden auch "Primärkategorien" genannt), die den Inhalt des Films kategorisieren, wie z.B. "Information", "Unterhaltung" Humor" Action", "Sport", "Erotik", "Kinderfilm" etc. Dabei können selbstverständlich an sich beliebige Kategorien gebildet werden.

Für jeden Film in der Spalte A wird in den Kategorien in den Spalten F bis M ein numerischer Zahlenwert auf einer vorgegebenen Skala, z.B. von "0" ("erfüllt die Kriterien der Kategorie überhaupt nicht", bis "10" ("erfüllt die Kriterien der Kategorie ganz genau") vergeben. Dieser numerische Zahlenwert wird z.B. von einer Jury festgelegt, welche die Filme vor deren Ausstrahlung hinsichtlich der Zuordnung solcher Kategorien und der Vergabe entsprechender Zahlenwerte anschaut und bewertet. Weiter unten wird noch eine bevorzugte Ausführungsform der Erfindung erläutert, dergemäß die numerischen Zahlenwerte nicht auf den Wertungen einer Jury basieren, sondern ihrerseits aus anderen Zahlenwertvorgaben für sogenannte "Sekundärkategorien" abgeleitet werden.

In der Fig. 1 ist dies für eine Reihe von Filmen I bis IX anschaulich gemacht worden.

Der Film I ("12 Uhr mittags") läuft als z.B. auf dem Sender ABC am 19.06. von 18:00 h bis 19:00 h und hat z.B. in der Kategorie K4 "Action" eine numerische Bewertung "7".

Die Kennziffern in einer einem Film zugeordneten Zeile bilden nunmehr einen Kennziffervektor.

Z.B. hat der Film I in Fig. 1 den Kennziffervektor

$$K^I = (K_1^I; ....; K_7^I) = (0;8;3;7;6;2;0)\cdot$$

Zwischen allen Filmen läßt sich nun basierend auf den numerischen Bewertungen in den Kategorien K1 bis K7 mathematisch ein Abstandsmaß zwischen ihren jeweiligen Kennziffervektoren definieren.

Dieses Abstandsmaß kann an sich beliebig definiert sein.

In der Praxis als sinnvoll erwiesen hat sich die Verwendung eines euklidischen Abstandsmaßes

$$d_{ab} = \sqrt{\sum_{i=1}^{n}(K_i^a - K_i^b)^2} \qquad\qquad \text{(Gl. 1)}$$

Dabei ist $d_{ab}$ der euklidische Abstand zwischen zwei durch die jeweiligen Kennzahlen $K_i^a$, $K_i^b$ in der jeweiligen Kategorie $i$ gekennzeichneten Filme $a$, $b$, welche entsprechende Kennziffervektoren $K^a$, $K^b$ aufweisen. $n$ (vorliegend $n$ = 7 in Fig. 1) ist die Anzahl der zur Verfügung stehenden Bewertungskategorien ("Primärkategorien").

So berechnet sich der euklidische Abstand zwischen den Filmen a=I und b=II in der Fig. 1 z.B. zu

$$d_{I-II} = \sqrt{(0-0)^2 + (8-8)^2 + (3-3)^2 + (7-8)^2 + (6-7)^2 + (2-4)^2 + (0-0)^2}$$
$$= \sqrt{0^2 + 0^2 + 0^2 + (-1)^2 + 1^2 + (-2)^2 + 0^2}$$
$$= \sqrt{1+1+4}$$
$$= \sqrt{6}$$
$$= 2,44949$$

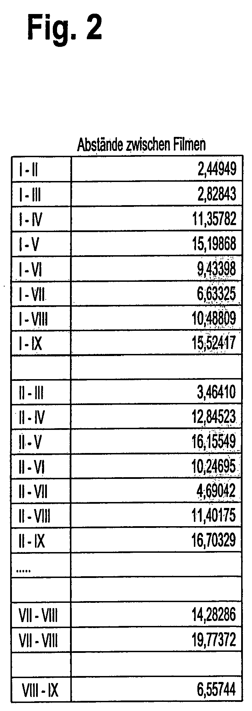

Diese Zahl ist relativ nahe am theoretischen Idealwert "0", d.h. die beiden Filme I und II in Fig. 1 passen hinsichtlich ihrer jeweiligen Kennzahlen $K_i^I$, $K_i^{II}$ in den einzelnen Kategorien $i$ = 1,..., 7 recht gut überein. Fig. 2 zeigt eine Tabelle, in der die Abstände zwischen den in Fig. 1 gezeigten Filmen berechnet sind.

Es ist aber ohne weiteres einsichtig, daß anstelle des oben verwendeten euklidischen Abstandes an sich jede beliebige mathematische Abstandsnorm verwendet werden kann. Insbesondere können auch Abstandsmaße in mathematischen Räumen verwendet werden, deren Dimension größer als 2 ist.

Insbesondere können also z.B. auch Gewichtungsfaktoren $g_i$ eingeführt werden können, wie die einzelnen Kennzahlen $K_i^a$ eines Films $i$ zu berücksichtigen sind, so daß man eine Abstandsnorm

$$d_{ab} = \sqrt{\sum_{i=1}^{n} g_i \bullet (K_i^a - K_i^b)^2} \qquad\qquad \text{(Gl. 2)}$$

bildet.

Je höher dabei der Wert $g_i$ ist, desto stärker geht der Abstand der Kennzahlen zweier Filme in der Bewertungskategorie $i$ bei der Bildung eines Abstandsmaßes ein.

Erfindungsgemäß werden in einer elektronischen Programmzeitschrift nunmehr die einzelnen Paaren von Filmen entsprechenden Abstände bei der grafischen Präsentation der Filme auf dem Bildschirm visualisiert. D.h, je kleiner das Abstandsmaß zwischen zwei Filmen ist, desto näher beieinanderliegend werden sie auf dem Bildschirm dargestellt.

Dabei gibt es verschiedene Möglichkeiten, wie insbesondere z.B.:

    1. Anordnung längs einer Geraden ("lineare Anordnung")
    2. Anordnung in Kreisringen ("konzentrische Anordnung").

Je nach verwendetem mathematischen Abstandsmaß können dabei in einem Computer auch Anordnungen in Räumen erfaßt werden, deren Dimension höher als 2 ist, und die sodann zu Zwecken der Veranschaulichung auf eine zweidimensionale Bildschirmfläche projiziert werden.

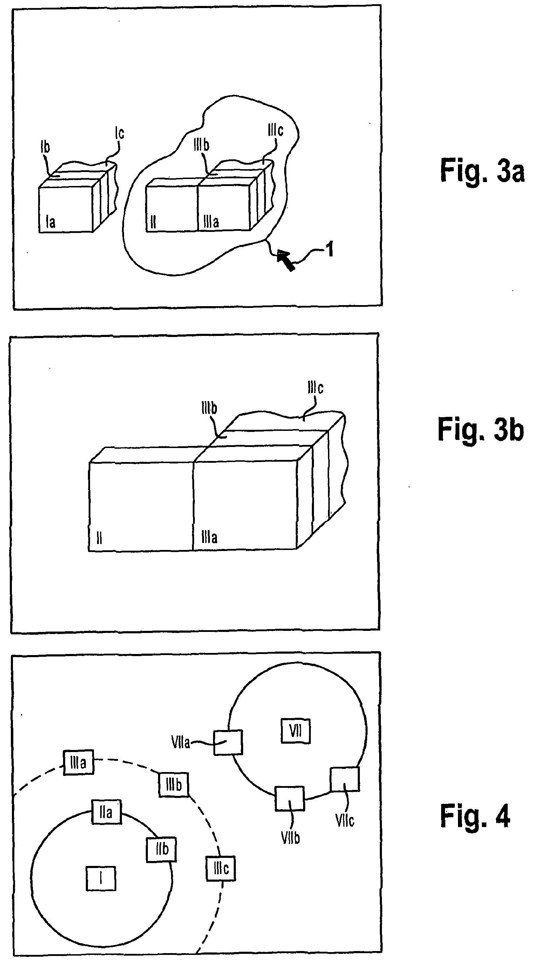

In Fig. 3a ist eine lineare Anordnung von einzelnen Bildsymbolen Ia, Ib, Ic, II, IIIa, IIIb, IIIc zu sehen, die jeweils repräsentativ für bestimmte Fernsehsendungen sind.

Die jeweiligen Bildsymbole werden gemäß eines vorab berechneten Abstandsmaßes angeordnet, welches aufgrund der den jeweiligen Fernsehsendungen entsprechenden Kennziffervektoren berechnet worden ist.

Ergibt sich dabei, daß einzelne Bildsymbole an derselben Position auf dem Bildschirm anzuordnen sind, so kann dies wie in Fig. 3a durch eine hintereinander gestaffelte Anordnung von Bildsymbolen, wie dies z.B. bei den Bildsymbolen Ia, Ib und Ic der Fall ist, veranschaulicht werden.

In einer bevorzugten Ausführungsform der vorliegenden Erfindung wird an einem Fernsehgerät ein Zusatzgerät angeschlossen, oder in diesem integriert, mittels dessen der Zuschauer in die Lage versetzt wird, über Eingabeelemente einen Zeiger 1 ("Cursor") über die Bildschirmfläche zu bewegen, mit dem Symbole, die bestimmten Filmen oder bestimmten Filmkategorien auf dem Bildschirm entsprechen, markiert werden können.

Mit dem Cursor 1 kann der Zuschauer jede beliebige Position anfahren und mit einer "Lasso-Funktion", wie sie z.B. bei der grafischen Bildbearbeitung bei CAD-Systemen verwendet wird, kann der Zuschauer den ihn interessierenden Bereich markieren. In Fig. 3a ist dies z.B. für einen die Bildsymbole II, IIIa, IIIb und IIIc umfassenden Bereich der Fall. Dieser Bereich kann dann mittels einer in einer Software implementierten Funktionalität im Detail dargestellt werden (wie in Fig. 3b gezeigt), bis der Zuschauer schließlich eine Auswahl mit gewünschter Auflösung hat, die für ihn zufriedenstellend ist.

Bei einer in Fig. 4 gezeigten konzentrischen Anordnung sind Bildsymbole für Filme, die denselben Abstand von einem vorgegebenen Ausgangspunkt haben, auf konzentrischen Kreisen angeordnet. Z.B. stimmen die Filme IIa, IIb hinsichtlich ihres Abstandes vom Film I überein, gleiches gilt für die Filme IIIa, IIIb, IIIc.

Softwaremäßig kann bei einer nach einem erfindungsgemäßen Verfahren dargestellten elektronischen Programmzeitschrift auch noch eine Option implementiert sein, daß nicht oder nicht nur die nach einem bestimmten Abstandsmaß definierten Abstände zwischen zwei tatsächlich zur Ausstrahlung anstehenden Filmen berechnet werden, sondern daß sich der Zuschauer einen selbstgewählten "Nullpunkt" durch die Vorgabe solcher Kennziffern definiert, die seinem "Idealfilm" in bestmöglicher Weise entsprechen, und von welchem ausgehend die Abstände der tatsächlich zu sehenden Filme berechnet werden.

Will ein Zuschauer z.B. nur Kindersendungen mit sehr hohem Informationsgehalt anschauen, so kann er sich den nachfolgend in Tabelle I gezeigten Idealfall als Ausgangspunkt wählen, um hierzu für jeden angebotenen Film einen Abstand auszurechnen.

Tabelle I:

| Information | Unterhaltung | Humor | Action | Sport | Erotik | Kindersendung |
|---|---|---|---|---|---|---|
| 10 | 0 | 0 | 0 | 0 | 0 | 10 |

Dabei kann dann dieser Idealfall als neuer Mittelpunkt eines Systems von konzentrischen Kreisen in der Fläche definiert werden. Dies ist in Fig. 4 z.B. beispielhaft für den neu gewählten "Nullpunkt" mit dem Bildsymbol VII der Fall.

Je weiter ein tatsächlich gesendeter Film dabei von diesem "Nullpunkt" beabstandet ist, desto weniger entspricht er dem vom Zuschauer vorgegebenen Wunschprofil.

Weiter besteht auch die Möglichkeit, daß ein tatsächlich gesendeter Film mit seinen Kennzahlen als Ausgangspunkt gewählt wird. Je kleiner dann der Abstand eines anderen Films von diesem vorgegebenen Film ist, desto besser entspricht dieser Film hinsichtlich seiner Kennzahlen dem vorgegebenen Film.

Eine weitere, vereinfachte Ausführungsform sieht vor, daß eine Jury vorab nur einer sogenannte "Genre-Klassifikation" durchgeführt hat, d.h. es gibt für einen Satz vorab angebotener Primärkategorien jeweils nur eine Primärkategorie, die mit einer "1" für "Film fällt unter diese Kategorie" bewertet ist. Alle anderen Kategorien bekommen den Wert "0" für "Film fällt nicht unter diese Kategorie", also z. B.

| Information | Unterhaltung | Humor | Action | Sport | Erotik | Kindersendung |
|---|---|---|---|---|---|---|
| 1 | 0 | 0 | 0 | 0 | 0 | 0 |

oder

| Information | Unterhaltung | Humor | Action | Sport | Erotik | Kindersendung |
|---|---|---|---|---|---|---|
| 0 | 0 | 0 | 1 | 0 | 0 | 0 |

Die Kennziffervektoren (1,0,...,0); (0,1,...,0); (0,0,...,1) bei einer solchen Genre-Klassifikation sind also "Einheitsvektoren".

Eine nochmals weitere Ausführungsform der vorliegenden Erfindung sieht vor, daß der Zuschauer die Möglichkeit hat, nicht direkt auf die ihm vorgegebenen Primärkategorien, im obigen Beispiel also Tabelle I:

Information Unterhaltung Humor Action Sport Erotik Kindersendung zurückzugreifen, sondern seine eigenen Kategorien ("Sekundärkategorien") mit von ihm im Prinzip frei wählbaren umgangssprachlichen Begriffsinhalten zu verwenden.

Das kann z.B. bedeuten, daß der Zuschauer im obigen Beispiel auf Begriffe wie

"informativ",

"spannend",

"lustig",

"aufregend",

"witzig",

"niveauvoll"

etc.

zurückgreift, die er z.B. über eine mit dem Fernsehgerät kommunizierende Eingabeeinrichtung mit alphanumerischer Texteingabe in eine Auswertungslogik eingibt und womit er sein Wunschprofil für einen von ihm gewünschten Film festlegen kann.

In einer im oder am Fernsehgerät installierten Auswertelogik werden diese vom Zuschauer eingegeben Begriffe, die sogenannten "Sekundärkategorien", gemäß empirisch vorab festgelegten Gewichtungsfaktoren den "Primärkategorien" zugeordnet.

Das kann z.B. so von statten gehen, daß empirisch aufgrund der Beobachtung des Sendeverhaltens einer repräsentativen Anzahl von Zuschauern vorab festgelegt worden ist, daß der Begriff "aufregend" gemäß den in der nachfolgenden Tabelle 2 gezeigten Gewichtungsfaktoren den Primärkategorien entsprechen soll.

Tabelle 2: Gewichtungsfaktoren für den Begriff "aufregend":

| Information | Unterhaltung | Humor | Action | Sport | Erotik | Kindersendung |
|---|---|---|---|---|---|---|
| 10% | 20% | 5% | 40% | 20% | 20% | 0% |

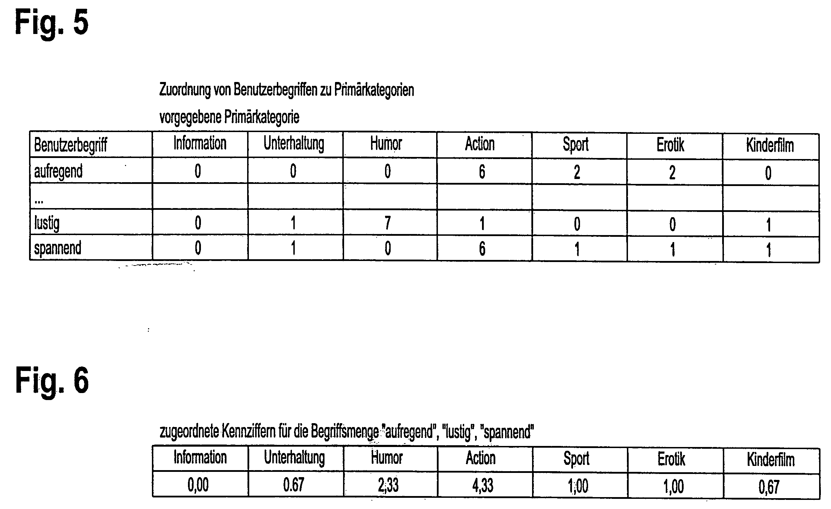

Entsprechende Zuordnungstabellen lassen sich für eine Vielzahl von umgangssprachlichen Begriffen aufstellen. In der im oder am Fernsehgerät anzubringende Auswertungslogik können so sehr umfangreiche Listen von umgangssprachlichen Wörtern hinterlegt sein, die vom Zuschauer bei der Auswahl seiner Wunschsendungen vorgegeben werden können und die mit entsprechenden Gewichtungsfaktoren belegt sind, wie in Fig. 3 gezeigt. Durch eine numerische Umskalierung können dabei die in Tabelle 2 angegebene Prozentzahlen direkt in von z.B. von "0" bis "10" laufende Zahlen umgerechnet werden, wie in Fig. 5 gezeigt. Hier wird bei der Berechnung eines Abstandsmaßes also von den in Gl. 2 zugrundegelegten gewichteten Abständen ausgegangen.

Weiterhin ist bei einer Fortbildung der Erfindung auch möglich, daß der Zuschauer eine Vielzahl von Begriffen eingibt, um seine Wunschsendung zu charakterisieren.

Gibt er zum Beispiel die drei Begriffe "aufregend", "lustig" und "spannend" ein, so wird, wie in Fig. 6 in Verbindung mit Fig. 5 gezeigt, ein Idealprofil für einen mit diesen Sekundärkategorien belegten Film mit den dort gezeigten Kennziffern in den sieben Primärkategorien von "Information" bis "Kinderfilm" festgelegt. Diese Kennziffern ergeben sich z.B. durch Durchschnittswertbildung der in den in Fig. 3 gezeigten Kennziffern in den einzelnen Kategorien für die drei vorgegebenen Begriffe.

Eine in der Auswertungslogik implementierte Software kann nunmehr die Filme in dem von den Sendeanstalten bereitgestellten Angebot heraussuchen, die einen möglichst kleinen Abstand von diesem Idealprofil haben und diesen Filmen entsprechende Symbole gemäß dem jeweils zwischen Idealprofil und Film berechneten Abstandsmaß beabstandet von einem dem Idealprofil entsprechenden Nullpunkt auf dem Bildschirm darstellen.

Die vorliegende Erfindung wurde unter Bezugnahme auf bevorzugte Ausführungsformen in Form einer elektronischen Programmzeitschrift zur grafischen Anordnung von Fernsehsendungen entsprechenden Bildfenstern auf einem Fernsehbildschirm erläutert. Es versteht sich jedoch für den Fachmann, daß die vorliegende Erfindung nicht auf diesen Anwendungsbereich beschränkt ist.

Statt auf einem Fernsehbildschirm darzustellende Fernsehsendungen kann es sich bei den Datenmengen, die vorabbestimmten, inhaltlichen Kategorien ("Primärkategorien") mit Kennziffern zugeordnet sind, zum Beispiel auch um Ton- oder Bildinformationen handeln, die über Mittel zum Speichern oder Einlesen von einzelnen Datenmengen zur Verfügung gestellt werden, wie z.B. das Internet oder CDs (compact disc) oder DVDs (digital video disc), und z.B. auf einem Computermonitor dargestellt werden.

Weiter sind dann Mittel zum Berechnen von Abstandsmaßen zwischen den je einem Paar einzelner Datenmengen entsprechenden Kennziffervektoren vorzusehen, wie z.B. ein PC (personal computer).

Letztlich werden dann noch Mittel gebraucht, die zum Darstellen von die Datenmengen charakterisierenden Informationen enthaltender Sichtfenster in einer zweidimensionalen Darstellung dienen, wobei die Sichtfenster unter Einhaltung der ihren jeweiligen Kennziffervektoren entsprechenden Abstände angeordnet sind. Solche Mittel können z.B. auch ein Computermonitor sein.

Es bietet sich somit gemäß der vorliegenden Erfindung grundlegend eine Möglichkeit, einzelne Datenmengen (wie z.B. Ton- oder Bildfolgen) in einer Informationssammlung dadurch intuitiv leichter zugänglich zu machen, daß man den einzelnen Datenmengen hinsichtlich bestimmter Primärkategorien Kennziffervektoren zuordnet, mittels derer Abstandsmaße zwischen den Datenmengen berechnet werden können, die bei einer grafischen Darstellung von den Datenmengen entsprechenden Symbolen auf einem Bildschirm berücksichtigt werden.

Hier ergeben sich vielfältige Anwendungsmöglichkeiten: In einem auf CD geführten Archiv über Zeitschriftenartikel kann man sich z.B. zu einem vorgegebenen Zeitschriftenartikel thematisch ähnliche Artikel heraussuchen und gemäß dem erfindungsgemäßen Verfahren auf einem Computermonitor anzeigen lassen. Bei einer Musiktitelsammlung in einem Internetarchiv kann man bei einander ähnlichen Titeln entsprechende Symbole auf einem Bildschirm benachbart darstellen, etc.

**Patentansprüche**

1. Verfahren zum Betreiben einer elektronischen Programmzeitschrift, die zum Zwecke des Auswählens von Fernsehsendungen ein elektronisches Navigieren unter Verwendung eines Bildschirms ermöglicht, wobei das Verfahren umfasst, dass bei dem elektronischen Navigieren durch Mittel zum Darstellen von Sichtfenstern eine Darstellung auf dem Bildschirm erfolgt, bei der Flächenausschnitte auf dem Bildschirm Fernsehsendungen zugeordnet werden,
   **dadurch gekennzeichnet,**
   **dass** den Fernsehsendungen Kennziffervektoren zugeordnet werden, die als n-Tupel aus vorbestimmten, inhaltlichen Kategorien zugeordneten Kennziffern gebildet werden, welche in Mitteln zum Speichern gespeichert werden, und
   **dass**

   a) zu Paaren der Fernsehsendungen die diesen Fernsehsendungen zugeordneten Kennziffervektoren zur Berechnung eines Abstandsmaßes nach einer bestimmten mathematisch definierten Rechenvorschrift durch Mittel zum Berechnen eines solchen Abstandsmaßes eingesetzt werden, und dass
   b) eine Anordnung der den einzelnen Fernsehsendungen zugeordneten Flächenausschnitte auf dem Bildschirm in Abhängigkeit von den Abstandsmaßen durch die Mittel zur Darstellung von Sichtfenstern bereitgestellt wird.

2. Verfahren nach Anspruch 1,
   **dadurch gekennzeichnet,**
   **dass** ein euklidisches Abstandsmaß verwendet wird.

3. Verfahren nach Anspruch 1 oder Anspruch 2,
   **dadurch gekennzeichnet,**
   **dass** die Anordnung längs einer Geraden bereitgestellt wird.

4. Verfahren nach Anspruch 1 oder Anspruch 2
   **dadurch gekennzeichnet,**
   **dass** die Anordnung in Kreisringen bereitgestellt wird.

5. Vorrichtung zur Durchführung des Verfahrens nach einem der vorhergehenden Ansprüche, mit einem Bildschirm und mit Mitteln zum Darstellen von den Fernsehsendungen zugeordneten Sichtfenstern in einer Anordnung von Flächenausschnitten auf dem Bildschirm,
   **gekennzeichnet durch**
   Mittel zum Speichern oder Einlesen eines Verzeichnisses von Fernsehsendungen und zugeordneter Kennziffervektoren, die als n-Tupel aus vorbestimmten, inhaltlichen Kategorien zugeordneten Kennziffern gebildet sind;
   Mittel zum Berechnen eines Abstandsmaßes nach einer bestimmten mathematisch definierten Rechenvorschrift unter Verwendung je eines Paares von Kennziffervektoren, welche einem Paar von Fernsehsendungen zugeordnet sind,
   wobei die Mittel zum Darstellen der Sichtfenster ausgelegt sind, die Flächenausschnitte in Abhängigkeit von von den Mitteln zum Berechnen berechneten Abstandsmaßen anzuordnen

6. Vorrichtung nach Anspruch 5
   **dadurch gekennzeichnet,**
   **dass** die Mittel zum Berechnen ein euklidisches Abstandsmaß verwenden.

7. Vorrichtung nach Anspruch 5 oder Anspruch 6,
   **dadurch gekennzeichnet,**

**dass** die Mittel zum Darstellen ausgelegt sind, eine Anordnung längs einer Geraden vorzunehmen.

8. Vorrichtung nach Anspruch 5 oder Anspruch 6,
**dadurch gekennzeichnet,**
**dass** die Mittel zum Darstellen ausgelegt sind, eine Anordnung in Kreisringen vorzunehmen.


**Claims**

1. Method to operate an electronic programme guide which enables an electronic navigation using a screen for the purposes of selecting television programmes, wherein the method comprises that, in the electronic navigation, a depiction on the screen occurs by means to depict viewing windows, in which the surface sections are allocated to television programmes on the screen,
   **characterised in that**,
   the indicator vectors are allocated to television programmes, which are formed as n-tuples from indicators allocated to pre-determined content categories, said indicators being stored in the means for storage and that

   a) to pair the television programmes, the indicator vectors allocated to these television programmes are used to calculate a distance dimension according to a determined, mathematically defined calculation rule by means to calculate such a distance dimension,
   and that
   b) an arrangement of the surface sections allocated to the individual television programmes on the screen is provided using the means for the depiction of viewing windows, depending on the distance dimensions.

2. Method according to claim 1,
   **characterised in that**
   a Euclidean distance dimension is used.

3. Method according to claim 1 or claim 2,
   **characterised in that**
   the arrangement is provided along a straight line.

4. Method according to claim 1 or claim 2
   **characterised in that**
   the arrangement is provided in circles.

5. Device to implement the method according to one of the preceding claims, having a screen and having means to depict viewing windows allocated to the television programmes in an arrangement of surface sections on the screen,
   **characterised by**
   means to store or read a list of television programmes and allocated indicator vectors which are formed as n-tuples from indicators allocated to predetermined content categories;
   means to calculate a distance dimension according to a determined, mathematically defined calculation rule, using each of a pair of indicator vectors which are allocated to a pair of television programmes, wherein the means to depict the viewing windows are designed to arrange the surface sections depending on distance dimensions calculated by the means to calculate.

6. Device according to claim 5,
   **characterised in that**
   the means to calculate use a Euclidean distance dimension.

7. Device according to claim 5 or claim 6,
   **characterised in that**
   the means to depict are designed to carry out an arrangement along a straight line.

8. Device according to claim 5 or claim 6,
   **characterised in that**
   the means to depict are designed to carry out an arrangement in circles.

**Revendications**

1. Procédé d'exploitation d'un programme de télévision électronique, qui permet une navigation électronique par l'utilisation d'un écran aux fins de la sélection d'émissions de télévision, le procédé comprenant le fait que lors de la navigation électronique, une représentation est réalisée sur l'écran à l'aide de moyens de représentation de fenêtres de visualisation, des parties de la surface de l'écran étant attribuées à des émissions de télévision,
**caractérisé**
**en ce que** des vecteurs de caractéristiques sont attribués aux émissions de télévision, lesquels sont formés en tant que tuples n à partir de caractéristiques prédéterminées, attribuées à des catégories de contenus, qui sont enregistrées dans des moyens d'enregistrement, et
**en ce que**

a) les vecteurs de caractéristiques attribués à ces émissions de télévision sont utilisés aux fins du calcul d'une mesure de distance selon une règle de calcul déterminée définie mathématiquement à l'aide de moyens de calcul d'une telle mesure de distance par paires des émissions de télévision,
et **en ce que**
b) un agencement des parties de la surface de l'écran attribuées aux émissions de télévision individuelles est fourni en fonction des mesures de distance par les moyens de représentation de fenêtres de visualisation.

2. Procédé selon la revendication 1,
**caractérisé**
**en ce qu'**une mesure de distance euclidienne est utilisée.

3. Procédé selon la revendication 1 ou la revendication 2,
**caractérisé**
**en ce que** l'agencement est fourni le long d'une droite.

4. Procédé selon la revendication 1 ou la revendication 2,
**caractérisé**
**en ce que** l'agencement est fourni dans des anneaux de cercle.

5. Dispositif destiné à la mise en oeuvre du procédé selon l'une des revendications précédentes, ayant un écran et ayant des moyens de représentation de fenêtres de visualisation attribuées aux émissions de télévision dans un agencement de parties de la surface de l'écran,
**caractérisé par**
des moyens d'enregistrement ou de lecture d'un répertoire d'émissions de télévision et de vecteurs caractéristiques qui leur sont attribués, qui sont formés en tant que tuples n à partir de caractéristiques prédéterminées, attribuées à des catégories de contenus ;
des moyens de calcul d'une mesure de distance selon une règle de calcul déterminée définie mathématiquement en utilisant à chaque fois une paire de vecteurs de caractéristiques qui sont attribués à une paire d'émissions de télévision,
les moyens de représentation des fenêtres de visualisation étant conçus pour agencer les parties de la surface en fonction de mesures de distance calculées par les moyens de calcul.

6. Dispositif selon la revendication 5,
**caractérisé**
**en ce que** les moyens de calcul utilisent une mesure de distance euclidienne.

7. Dispositif selon la revendication 5 ou la revendication 6,
**caractérisé**
**en ce que** les moyens de représentation sont conçus pour réaliser un agencement le long d'une droite.

8. Dispositif selon la revendication 5 ou la revendication 6,
**caractérisé**
**en ce que** les moyens de représentation sont conçus pour réaliser un agencement dans des anneaux de cercle.

# Fig. 1

| Filmnr. | Filmtitel | Sender | Datum | Startzeit | Endzeit | 1 Information K1 | 2 Unterhaltung K2 | 3 Humor K3 | 4 Action K4 | 5 Sport K5 | 6 Erotik K6 | 7 Kinderfilm K7 |
|---|---|---|---|---|---|---|---|---|---|---|---|---|
| I | 12 Uhr mittags | ABC | 19.06. | 18:00 h | 19:00 h | 0 | 8 | 3 | 7 | 6 | 2 | 0 |
| II | Die Straßen von San Francisco | BCA | 20.06. | 19:00 h | 21:00 h | 0 | 8 | 3 | 8 | 7 | 4 | 0 |
| III | Raumschiff Enterprise | DEF | 18.06. | 19:30 h | 21:30 h | 0 | 7 | 4 | 7 | 5 | 3 | 2 |
| IV | Sportschau | KLX | 19.06. | 21:30 h | 18:30 h | 5 | 5 | 2 | 0 | 2 | 0 | 5 |
| V | Tagesschau | ABC | 19.06. | 17:00 h | 19:30 h | 10 | 0 | 0 | 0 | 5 | 0 | 2 |
| VI | Manche mögen's heiß | BCS | 20.06. | 21:00 h | 24:00 h | 0 | 10 | 9 | 2 | 2 | 4 | 2 |
| VII | Highlander | XYZ | 18.06. | 19:00 h | 21:30 h | 0 | 9 | 6 | 10 | 9 | 6 | 0 |
| VIII | Endeckungsreise ins Mittelalter | ABC | 19.06. | 21:30 h | 18:30 h | 7 | 4 | 3 | 2 | 4 | 2 | 4 |
| IX | Unser Sonnensystem | DEF | 20.06. | 16:00 h | 18:00 h | 8 | 2 | 2 | 1 | 0 | 0 | 8 |

EP 1 280 343 B1

# Fig. 2

Abstände zwischen Filmen

| | |
|---|---|
| I - II | 2,44949 |
| I - III | 2,82843 |
| I - IV | 11,35782 |
| I - V | 15,19868 |
| I - VI | 9,43398 |
| I - VII | 6,63325 |
| I - VIII | 10,48809 |
| I - IX | 15,52417 |
| | |
| II - III | 3,46410 |
| II - IV | 12,84523 |
| II - V | 16,15549 |
| II - VI | 10,24695 |
| II - VII | 4,69042 |
| II - VIII | 11,40175 |
| II - IX | 16,70329 |
| ..... | |
| | |
| VII - VIII | 14,28286 |
| VII - VIII | 19,77372 |
| | |
| VIII - IX | 6,55744 |

Fig. 3a

Fig. 3b

Fig. 4

# Fig. 5

Zuordnung von Benutzerbegriffen zu Primärkategorien

vorgegebene Primärkategorie

| Benutzerbegriff | Information | Unterhaltung | Humor | Action | Sport | Erotik | Kinderfilm |
|---|---|---|---|---|---|---|---|
| aufregend | 0 | 0 | 0 | 6 | 2 | 2 | 0 |
| ... | | | | | | | |
| lustig | 0 | 1 | 7 | 1 | 0 | 0 | 1 |
| spannend | 0 | 1 | 0 | 6 | 1 | 1 | 1 |

# Fig. 6

zugeordnete Kennziffern für die Begriffsmenge "aufregend", "lustig", "spannend"

| Information | Unterhaltung | Humor | Action | Sport | Erotik | Kinderfilm |
|---|---|---|---|---|---|---|
| 0,00 | 0.67 | 2,33 | 4,33 | 1,00 | 1,00 | 0,67 |

EP 1 280 343 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0002385 A1
- WO 0133838 A1
- US 5758257 A
- US 6163316 A
- US 6005597 A